# FASCICULE DE BREVET EUROPEEN

(11) **EP 0 538 143 B1**
(45) Date de publication et mention de la délivrance du brevet: **27.08.1997**
(21) Numéro de dépôt: 92402845.9
(22) Date de dépôt: 16.10.1992
(51) Int. Cl.: B01D 71/02

(54) **Membranes de filtration inorganique dont la couche séparatrice est en céramique sensiblement exempte d'oxygène**
Anorganische Filtrationsmembrane mit im wesentlichen sauerstoffreier keramischer Trennschicht
Inorganic filtration membranes with essentially oxygen-free ceramic separating layer

(30) Priorité: 18.10.1991 FR 9112870
(43) Date de publication de la demande: 21.04.1993
(73) Titulaire: TECH-SEP, F-92408 Courbevoie Cédex (FR)
(72) Inventeur: Durand, Jean, Les Hauts de l'Arnel - Bâtiment D, F-34070 Montpellier (FR); Grangeon, André, F-84600 Valréas (FR)
(74) Mandataire: Seugnet, Jean Louis

(56) Documents cités:
- JOURNAL OF ELECTROSTATICS vol. 25, no. 1, Juin 1990, AMSTERDAM, NL pages 125 - 133 H. YAMAMOTO ET AL. 'ELECTROSTATIC FORMATION OF CERAMIC MEMBRANES USING CVD ULTRA-FINE PARTICLES'
- PATENT ABSTRACTS OF JAPAN vol. 6, no. 98 (C-106)(976) 8 Juin 1982
- PATENT ABSTRACTS OF JAPAN vol. 11, no. 085 (C-410)14 Mars 1987

## Description

La présente invention concerne une membrane inorganique d'ultrafiltration ou de nanofiltration dont la couche séparatrice est en céramique ayant une teneur en oxygène inférieure à 1 % en poids et un procédé d'obtention d'une telle membrane.

Les procédés de séparation en milieu liquide à savoir la microfiltration, l'ultrafiltration et la nanofiltration le plus souvent sous flux tangentiel utilisent de plus en plus des membranes inorganiques, compte tenu principalement de leurs résistances mécaniques et de leurs stabilités chimiques et thermiques supérieures à celles des membranes organiques.

Ces membranes inorganiques sont constituées d'une part d'un support poreux homogène ou asymétrique (c'est-à-dire d'une superposition de couches de porosité décroissantes), le plus souvent tubulaire, dont le rôle essentiel est de conférer les propriétés mécaniques et d'autre part, d'une couche séparatrice perméable très mince assurant la séparation et comportant des pores dont les diamètres sont adaptés aux solutés à arrêter.

Les supports sont généralement choisis parmi le carbone, les métaux et les oxydes métalliques en particulier l'alumine. Les couches séparatrices sont généralement constituées d'un matériau choisi parmi le carbone et les oxydes métalliques principalement la zircone, l'alumine et l'oxyde de titane.

Les procédés connus pour le dépôt de telles couches passent par le dépôt en couche mince soit d'une barbotine de poudres d'oxydes précités dont on a contrôlé la granulométrie soit d'une dispersion colloïdale provenant d'un gel (ou d'une suspension) de ces mêmes oxydes ou d'un alcoxyde métallique partiellement hydrolysé (procédé sol/gel). Les étapes ultérieures consistent essentiellement en l'élimination du solvant et des produits organiques suivi d'un frittage partiel.

Ces procédés connus ne sont pas transférables au dépôt d'une couche céramique sensiblement exempte d'oxygène du fait essentiellement du caractère très difficilement frittable d'une telle céramique.

En outre, de telles couches séparatrices peuvent présenter, pour certaines applications, une résistance mécanique médiocre provenant essentiellement de l'adhérence insuffisante de cette couche séparatrice à la surface du support, en particulier dans le cas où ce support est en oxyde métallique, avec laquelle elle est directement en contact.

Or ce type de céramique présente une stabilité chimique et thermique qui serait précieuse dans les membranes inorganiques.

Le "Journal of Electrostatics, Vol.25 n=̇1, June 1990, Pages 125-133" enseigne un procédé CVD thermique pour la production d'une poudre de Si₃N₄ qui est ensuite déposée par "électrostatisme" puis frittée in situ à 1200°C. Le produit obtenu est une membrane de microfiltration ayant des pores allant de 0,2 à 1.0 µm.

Un but de la présente invention est précisément de proposer une membrane inorganique d'ultrafiltration ou de nanofiltration comportant une couche séparatrice en matériau céramique ayant une teneur en oxygène inférieure à 1 % en poids et présentant une résistance mécanique et une stabilité thermique et chimique améliorées.

Un autre but de la présente invention est de proposer un procédé de dépôt d'une couche séparatrice du type ci-dessus adhérent bien au support par exemple en oxyde métallique.

Un autre but de la présente invention est de proposer une couche séparatrice du type ci-dessus dont le diamètre moyen des pores soit adapté au type de filtration envisagée (ultrafiltration, nanofiltration).

Ces buts sont atteints par la présente invention qui concerne une membrane inorganique telle que définie dans les revendications 4 et 7 et son procédé d'obtention tel que défini dans la revendication 1. Des modes préférentiels de réalisation de l'invention sont définis dans les revendications dépendantes.

Selon une variante préférée de l'invention, le procédé de dépôt chimique comporte un moyen pour abaisser la température au cours du dépôt. Ce moyen est de préférence l'utilisation d'un plasma, radiofréquence ou microonde.

Les supports inorganiques poreux sont des produits bien connus-et constituent, par eux-mêmes, des membranes. Ils se présentent généralement mais non nécessairement, sous forme surtout de tubes et parfois de plaques.

Ces supports peuvent être homogènes c'est-à-dire présenter la même porosité dans toute la masse. La plupart du temps ces supports sont asymétriques c'est-à-dire que ces supports sont constitués de plusieurs couches de porosité décroissante. Dans ce dernier cas, le plus courant, le support est constitué d'un support macroporeux généralement, en métal ou en alliage métallique (par exemple en nickel ou en alliage de nickel), en acier inoxydable, en carbone, ou bien en un matériau céramique tel qu'un oxyde, un carbure, un nitrure ou un siliciure (par exemple en alumine ou en carbure de silicium). Sur l'une des deux faces de ce support microporeux on dépose par des procédés appropriés, tels que ceux cités ci-dessus, au moins une couche membranaire minérale généralement constituée par au moins une couche d'un oxyde métallique, d'un métal le plus souvent choisi parmi le béryllium, le magnésium, le calcium, l'aluminium, le titane, le strontium, l'yttrium, le lanthane, le zirconium, le hafnium, le thorium,le tungstène, le fer, le manganèse, le silicium et analogues. Comme indiqué ci-dessus, les oxydes les plus couramment utilisés sont les oxydes de titane, d'aluminium et de zirconium associés à des supports macroporeux en carbone et en alumine.

Un paramètre important est la porosité (le diamètre moyen des pores) du support poreux A. Dans le cas d'un support asymétrique, la porosité du support A est bien entendu la porosité de la dernière couche en contact avec la couche séparatrice B proprement dite.

Dans le cadre de la présente invention, on recommande comme porosité du support poreux A un diamètre moyen des pores compris entre 0,005 et 5 µm, de préférence entre 0,01 et 0,1 µm (µm = micromètre).

La céramique constitutive de la couche B a une teneur en oxygène inférieure à 1 % en poids.

La céramique constitutive de la couche B est formée à partir d'au moins deux éléments choisis parmi le silicium, le bore, l'aluminium, le titane, le tungstène, le phosphore, le zirconium, l'azote et le carbone.

Comme exemples de céramique, on peut citer les carbures, les nitrures, les carbonitrures et les borures.

Des céramiques utilisables sont en particulier SiC, SiCN, Si₃N₄, BN, TiB₂, TiN, WC, AlN, P₃N₅, ZrN et ZrC.

Les formules citées ci-dessus sont des formules moyennes données à titre illustratif, étant donné que les céramiques, en particulier celles obtenues par dépôt chimique en phase vapeur (CVD), assisté par plasma (PECVD), ne sont pas en général rigoureusement stoechiométriques. En outre, ces céramiques peuvent comporter des éléments d'inclusion tels que l'hydrogène provenant des précurseurs gazeux utilisés, en particulier dans le procédé PECVD.

Ces précurseurs à l'état gazeux dans les conditions requises par le procédé CVD ou PECVD se déposent sous forme de céramique solide sur le support poreux par des réactions notamment de combinaison, de dismutation ou de décomposition.

Ces précurseurs sont bien connus de l'homme de métier qui sait les choisir en vue de faire une céramique déterminée. Ces précurseurs comprennent notamment N₂, NH₃, CH₄, SiH₄, SiCl₄, les hydrogénoalkylsilanes, les disilanes, les silazanes, TiCl₄, BCl₃, etc...

La céramique SiC est plus particulièrement préférée dans le cadre de la présente invention et préparée à partir des précurseurs CH₄ et SiH₄.

Les procédés CVD (chemical vapor déposition) et PECVD (plasma enhanced chemical vapor déposition) sont des procédés bien connus qui sont décrits en détail dans de très nombreuses publications et qui ont connu un essor considérable en particulier dans l'industrie électronique pour la technologie des semi-conducteurs.

Dans ce cas on cherche à obtenir un dépôt mince, non poreux composé de grains de céramiques équiaxiaux.

Selon la présente invention, on a trouvé les conditions opératoires qui permettent d'obtenir un dépôt également mince (de l'ordre de 0,1 à 10 µm) et poreux et dont la porosité est contrôlable.

Ce résultat a pu être obtenu :
- en mettant en oeuvre le procédé CVD et PECVD à très forte saturation,
- en utilisant des rapports pressions partielles de gaz précurseurs sur pression totale dans le réacteur les plus faibles possible.

Par ailleurs, on a pu mettre en évidence, conformément à la présente invention que plus on augmente la pression totale, plus la porosité de la couche augmente.

On a en outre noté que la température au sein du réacteur doit être la plus basse possible pour abaisser la porosité et diminuer la taille des grains de céramique. En outre, la géométrie du réacteur et des électrodes a une influence sur le dépôt.

Selon une variante préférée de l'invention et en vue d'abaisser la température de dépôt, on utilise le procédé PECVD selon lequel l'énergie est fournie aux gaz précurseurs soit directement, soit au gaz porteur (par exemple l'hélium, l'argon, etc...) qui le transfère ensuite aux gaz précurseurs.

Les radiofréquences (RF) et les fréquences microondes sont à l'heure actuelle les 2 méthodes les plus communes pour engendrer des plasmas. A l'aide des indications fournies dans la présente demande, l'homme du métier, par des expériences de routine, n'aura aucune difficulté à adapter les conditions opératoires du dépôt CVD en vue d'obtenir une porosité adaptée à la nanofiltration (diamètre moyen des pores de l'ordre de 1 nm = 1 nanomètre)) ou à l'ultrafiltration (diamètre compris entre 2 et 150 nm).

L'invention est adaptée à la réalisation de membrane d'ultrafiltration et surtout de nanofiltration.

Selon l'invention, le procédé CVD ou PECVD est utilisé à la fois d'une part pour engendrer la céramique exempte d'oxygène à partir des gaz précurseurs et, d'autre part, pour déposer cette céramique sur le support.

Pour améliorer le dépôt membranaire, l'on fait subir au dépôt membranaire un traitement thermique à une température comprise entre 250 et 850°C afin d'en modifier ses caractéristiques texturales.

L'invention sera mieux comprise à la lecture de l'exemple suivant de réalisation donné à titre illustratif nullement limitatif et référence sera faite au dessin annexé sur lequel :
- la figure 1 est un schéma du réacteur de dépôt,
- la figure 2 est un schéma d'une boucle de circulation de filtration tangentielle.

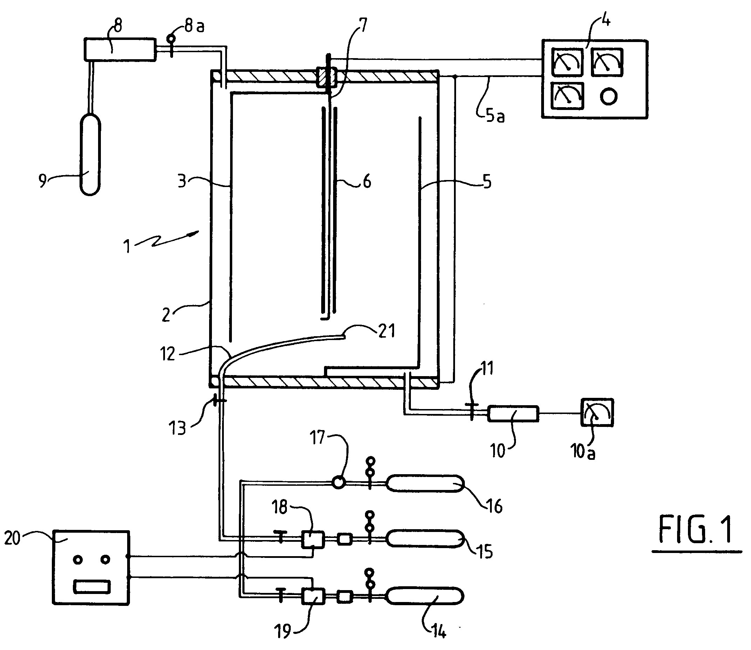

Sur la figure 1, on voit que le réacteur (1) comportant un tube (2) de quartz de 19 cm de diamètre interne et 39 cm de hauteur interne est muni d'une électrode RF (radiofréquence) en aluminium (3) reliée à un générateur électrique (4) basse fréquence de 110 KHz et une deuxième électrode (5) reliée à la masse (5a). Le support poreux (6) est suspendu entre les deux électrodes par l'intermédiaire d'un fil métallique (7). Le support poreux (6) est porté au potentiel RF par le fil (7).

Chaque électrode a une surface de 220 cm2 et la distance entre les deux électrodes est de 8 cm. Un système de pompage primaire (8) ALCATEL 2033 CP PLUS ® de débit 35 m3/h, relié à un réservoir d'azote en vue de son balayage permet d'atteindre un vide limite de 0,10 hPa. Une vanne soufflet (8a) est prévue en amont de la pompe (8) et permet de régler la pression totale dans l'enceinte réactionnelle à la valeur choisie. Le contrôleur de pression (10) de type PIRANI ® (jauge ALCATEL PI 12®) et son boîtier de mesure PB 101® (10a), sont isolés de l'enceinte par une vanne papillon (11).

En (12) est représenté le tube d'injection des gaz précurseurs, muni d'une vanne (13). Le tube (12) est alimenté par 2 réservoirs (l'un de méthane, l'autre de SiH₄) respectivement (14) et (15) (gaz précurseurs) et par un réservoir (16) de gaz porteur inerte de préférence l'hélium, comportant à sa sortie un régulateur de débit (17). Les ouvertures des réservoirs (14) et (15) sont régulés par les débitmètres massiques (18) et (19) asservis par un calculateur (20).

L'extrémité (21) du tube d'injection (12) est située à mi-distance entre les électrodes (3) et (5).

On dispose à l'intérieur du réacteur comme support poreux une membrane d'ultrafiltration de 10 mm de diamètre externe de 6 mm de diamètre interne et de 200 mm de longueur. Cette membrane est formée d'un support macroporeux en carbone et d'une couche membranaire externe en zircone dont le diamètre moyen des pores est de 83 nm (nanomètres).

Avant chaque dépôt, le réacteur est évacué jusqu'à une pression limite voisine de 2.10⁻²hPa. Un plasma d'hélium (débit 40 cm3/min), de densité de puissance 0,44 W/cm2, est établi pendant 10 minutes pour dégazer par bombardement ionique toutes les parties du réacteur et activer la surface du support poreux. Après cette opération, on actionne la pompe (8) jusqu'à atteindre une pression limite de 7.10⁻³hPa. Le mélange de gaz : silane, méthane et hélium est alors introduit dans le réacteur.
La vitesse de pompage est amenée au niveau maximum par l'ouverture complète de la vanne soufflet (8a) située en amont de la pompe (8).

Les divers paramètres sont fixés aux valeurs suivantes :
- pression totale : 0,20 hPa,
- pression partielle d'hélium :0,16 hPa,
- pression de décharge du plasma : 0,3 hPa,
- pression partielle SiH₄ + CH₄ : 0,1 hPa,
- débit SiH₄ : 3,3 cm3/minute,
- débit CH₄ : 8,7 cm3/minute,
- intensité du générateur de plasma : 0,5 A,
- densité de puissance du plasma : 0,44 Watt/cm2,
- fréquence d'excitation du générateur de plasma : 110 KHz,
- température : 20°C,
- durée de dépôt : 1 heure,
- épaisseur du dépôt : 1,4 µm.

Bien entendu, durant le dépôt, le support poreux est porté au potentiel RF dans le réacteur.

L'observation en microscopie à balayage montre que le dépôt est homogène et d'épaisseur de 1,4 µ sur une longueur de 20 cm.

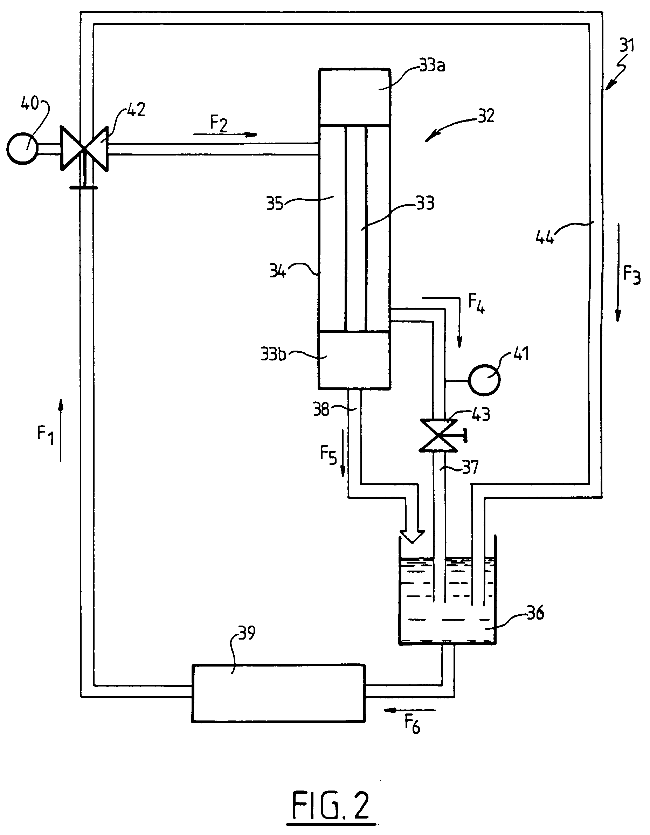

Sur cette membrane, on effectue des opérations de nanofiltration, à pression constante de 10 bars, à l'aide d'une boucle de circulation représentée schématiquement à la figure 2 du dessin annexé.

Cette boucle (31) comporte un module (32) de nanofiltration comportant la membrane (33) préparée ci-dessus. Cette membrane (33) présente donc un revêtement membranaire en SiC déposé sur sa surface périphérique externe et cette membrane est disposée au centre du carter cylindrique (34). Ce carter (34) comporte à ses deux extrémités deux compartiments (33a) et (33b) assurant le maintien et l'étanchéité de la membrane (33). Le carter (34) comporte un compartiment (35) d'introduction de la solution à traiter, cette solution étant stockée dans le réservoir (36). Le rétentat est évacué par la conduite (37) dans le réservoir (36) par la canalisation (38). La circulation de la solution à traiter s'effectue dans la boucle (31) suivant le sens des flèches F₁ à F₆.

Cette boucle (31) comporte en outre une pompe (39) d'alimentation de la solution à traiter assurant à la fois le rôle de pompe d'alimentation appliquant la pression désirée et de pompe de recirculation permettant à la solution à traiter de tourner dans la boucle en circuit fermé. Cette boucle comporte en outre deux jauges de pression (40) et (41), deux vannes (42) et (43), une conduite de trop plein (44) débouchant dans le réservoir (36) contenant la solution à traiter. Les vannes (42) et (43) associées aux jauges (40) et (41) permettent de régler la pression.

La boucle comporte en outre un échangeur de chaleur (non représenté) stabilisant la température de la solution et un thermomètre (non représenté) mesurant la température de la solution.

Cette boucle fonctionne selon un procédé continu en circuit fermé. La solution à traiter est envoyée dans le module puis revient dans le réservoir ainsi que le perméat (à l'exception des échantillons nécessaires à l'analyse) afin de conserver la concentration de la solution à traiter constante. On calcule la densité de flux de perméat en litre par heure et par m2 en mesurant la quantité de perméat recueilli en un temps donné et en divisant par la surface effective de la membrane.

Trois types de solutions notées (a), (b) et (c) à traiter sont tilisées :
- (a) une eau de ville potable,
- (b) la même eau de ville solubilisant du "Yellow Acid 42θ" (masse moléculaire 759 g, diamètre moléculaire = 1,4 nm) à environ 0,0013 M.
- (c) la même eau de ville solubilisant du saccharose (masse moléculaire 342 g, diamètre moléculaire = 1,025 nm) à environ 0,1 M.

Les perméats obtenus sont caractérisés par 2 méthodes physiques adaptées à chaque type de soluté :
* La polarimétrie et la réfractométrie déterminent la rétention en saccharose, molécule ayant un pouvoir rotatoire optique.
* La spectrophotométrie d'absorption donne la rétention en Yellow Acid θ, molécule colorée et absorbant dans le visible et l'ultraviolet.

On trouve :
- pour la solution de Yellow Acid une densité de flux de perméat constante, dès le début du fonctionnement de la boucle, de 21 l.h⁻¹m⁻² et un taux de rétention de 100 %.
- pour la solution de saccharose une densité de flux de perméat constante au bout d'environ 20 mn de 60 l.h⁻¹m2 et un taux de rétention de 60 %.
- pour l'eau de ville une densité de flux de perméat constante, au bout d'environ 1 h, d'environ 210 l.h⁻¹m⁻² contre 1875 l.h⁻¹m⁻² pour la même membrane mais non revêtue de la couche céramique.

De l'ensemble de ces résultats, on en déduit que le diamètre moyen des pores de la couche céramique est de l'ordre de 1,5 nm avec un seuil de coupure voisin de 600 daltons. On a donc obtenu une membrane de nanofiltration revêtue d'une couche de céramique poreuse et ayant une teneur en oxygène inférieure à 1 % en poids-

## Revendications

1. Procédé d'obtention d'une membrane inorganique d'ultrafiltration ou de nanofiltration comportant un support poreux A en contact avec une couche séparatrice B en céramique ayant une teneur en oxygène inférieure à 1 % en poids, dans lequel l'on utilise un procédé de dépôt chimique en phase vapeur, d'une part, pour former la céramique de la couche B à partir d'une combinaison d'au moins deux éléments choisis parmi le silicium, le bore, l'aluminium, le titane, le tungstène, le phosphore, le zirconium, l'azote et le carbone, et, d'autre part, pour déposer ladite couche B sur le support A, ledit procédé de dépôt chimique en phase vapeur étant suivi d'un traitement thermique à une température comprise entre 250 et 850 °C.

2. Procédé selon la revendication 1, caractérisé en ce que le procédé de dépôt chimique en phase vapeur comporte un moyen en vue d'abaisser la température au cours du dépôt.

3. Procédé selon la revendication 2, caractérisé en ce que ce moyen est un plasma radiofréquence ou microonde.

4. Membrane d'ultrafiltration ou de nanofiltration inorganique comportant un support poreux A en contact avec une couche séparatrice B en céramique ayant une porosité adaptée à la nanofiltration ou à l'ultrafiltration, ladite membrane étant susceptible d'être obtenue par le procédé selon l'une des revendications 1 à 3, la céramique n'étant pas en Si₃N₄.

5. Membrane selon la revendication 4, caractérisée en ce que c'est une membrane de nanofiltration dont le diamètre moyen des pores est de l'ordre de 1 nm.

6. Membrane selon la revendication 4, caractérisée en ce que c'est une membrane d'ultrafiltration dont le diamètre moyen des pores est compris entre 2 et 150 nm.

7. Membrane d'ultrafiltration inorganique comportant un support poreux A en contact avec une couche séparatrice B en céramique ayant une porosité adaptée à l'ultrafiltration, ladite membrane étant susceptible d'être obtenue par le procédé selon l'une des revendications 1 à 3, ladite membrane ayant un diamètre moyen des pores compris entre 2 et 150 nm.

8. Membrane selon l'une des revendications 4 à 7, caractérisée en ce que le diamètre moyen des pores du support poreux A en contact avec la couche séparatrice B est compris entre 0,005 et 5 µm, de préférence entre 0,01 et 0,1 µm.

9. Membrane selon l'une des revendications 4 à 8, caractérisée en ce que la céramique est choisie parmi les carbures, les carbonitrures, les borures et les nitrures.

10. Membrane selon l'une des revendications 4 à 9, caractérisée en ce que la céramique est choisie parmi SiC, SiCN, BN, TIB₂, TiN, WC, AIN, P₃N₅, ZrN et ZrC.

11. Membrane selon la revendication 7, caractérisée en ce que la céramique est en Si₃N₄.

12. Membrane selon la revendication 10, caractérisée en ce que la céramique est en SiC préparée à partir des précurseurs CH₄ et SiH₄.

13. Membrane selon l'une quelconque des revendications précédentes, caractérisée en ce que le support A est choisi parmi les oxydes métalliques, le carbone et les métaux.

14. Membrane selon la revendication 12, caractérisée en ce que l'oxyde métallique est choisi parmi les oxydes de titane, d'aluminium et de zirconium.

## Claims

1. Process for producing an inorganic ultrafiltration or nanofiltration membrane comprising a porous support A in contact with a ceramic separating layer B having an oxygen content of less than 1% by weight, in which a chemical vapour deposition process is used, on the one hand, in order to form the ceramic of the layer B from a combination of at least two elements chosen from silicon, boron, aluminium, titanium, tungsten, phosphorus, zirconium, nitrogen and carbon and, on the other hand, in order to deposit the said layer B on the support A, the said chemical vapour deposition process being followed by a heat treatment at a temperature of between 250 and 850°C.

2. Process according to claim 1, characterized in that the chemical vapour deposition process comprises a means for the purpose of lowering the temperature during deposition.

3. Process according to claim 2, characterized in that this means is a radiofrequency or microwave plasma.

4. Inorganic ultrafiltration or nanofiltration membrane comprising a porous support A in contact with a ceramic separating layer B having a porosity suited to nanofiltration or to ultrafiltration, the said membrane being capable of being obtained by the process according to one of claims 1 to 3, the ceramic not being made of Si₃N₄.

5. Membrane according to claim 4, characterized in that it is a nanofiltration membrane for which the mean diameter of the pores is of the order of 1 nm.

6. Membrane according to claim 4, characterized in that it is an ultrafiltration membrane for which the mean diameter of the pores is between 2 and 150 nm.

7. Inorganic ultrafiltration membrane comprising a porous support A in contact with a ceramic separating layer B having a porosity suited to ultrafiltration, the said membrane being capable of being obtained by the process according to one of claims 1 to 3, the said membrane having a mean diameter of the pores of between 2 and 150 nm.

8. Membrane according to one of claims 4 to 7, characterized in that the mean diameter of the pores of the porous support A in contact with the separating layer B is between 0.005 and 5 µm, preferably between 0.01 and 0.1 µm.

9. Membrane according to one of claims 4 to 8, characterized in that the ceramic is chosen from carbides, carbonitrides, borides and nitrides.

10. Membrane according to one of claims 4 to 9, characterized in that the ceramic is chosen from SiC, SiCN, BN, TiB₂, TiN, WC, AlN, P₃N₅, ZrN and ZrC.

11. Membrane according to claim 7, characterized in that the ceramic is made of Si₃N₄.

12. Membrane according to claim 10, characterized in that the ceramic is made of SiC prepared from the precursors CH₄ and SiH₄.

13. Membrane according to any one of the preceding claims, characterized in that the support A is chosen from metal oxides, carbon and metals.

14. Membrane according to claim 12, characterized in that the metal oxide is chosen from titanium, aluminium and zirconium oxides.

## Patentansprüche

1. Verfahren zur Herstellung einer anorganischen Membran für die Ultrafiltration oder Nanofiltration, umfassend einen porösen Träger A in Kontakt mit einer trennenden Schicht B aus Keramik mit einem Gehalt an Sauerstoff von unter 1 Gew.-%, wobei man ein Verfahren zur chemischen Ablagerung in der Dampfphase anwendet, um einerseits die Keramik der Schicht B ausgehend von einer Kombination von mindestens zwei Elementen zu bilden, ausgewählt unter Silicium, Bor, Aluminium, Titan, Wolfram, Phosphor, Zirkonium, Stickstoff und Kohlenstoff, und andererseits zur Ablagerung der genannten Schicht B auf dem Träger A dem genannten Verfahren zur chemischen Ablagerung in der Dampfphase eine thermische Behandlung bei einer Temperatur zwischen 250 °C und 850 °C anschließt.

2. Verfahren nach Anspruch 1, dadurch gekennzeichnet, daß das Verfahren zur chemischen Ablagerung in der Dampfphase ein Mittel im Hinblick auf die Absenkung der Temperatur im Verlauf der Ablagerung umfaßt.

3. Verfahren nach Anspruch 2, dadurch gekennzeichnet, daß das Mittel ein Radiofrequenz-Plasma oder eine Mikrowelle ist.

4. Anorganische Membran für die Ultrafiltration oder Nanofiltration, umfassend einen porösen Träger A in Kontakt mit einer trennenden Schicht B aus Keramik mit einer an die Ultrafiltration oder Nanofiltration angepaßten Porosität, wobei die genannte Membran geeignet ist, nach dem Verfahren gemäß einem der Ansprüche 1 bis 3 erhalten zu werden und die Keramik nicht aus Si₃N₄ besteht.

5. Membran nach Anspruch 4, dadurch gekennzeichnet, daß sie eine Membran für die Nanofiltration ist, deren mittlerer Porendurchmesser in der Größenordnung von 1 nm liegt.

6. Membran nach Anspruch 4, dadurch gekennzeichnet, daß sie eine Membran für die Ultrafiltration ist, deren mittlerer Porendurchmesser zwischen 2 nm und 150 nm liegt.

7. Anorganische Membran für die Ultrafiltration, umfassend einen porösen Träger A in Kontakt mit einer trennenden Schicht B aus Keramik mit einer an die Ultrafiltration angepaßten Porosität, wobei die genannte Membran geeignet ist, nach dem Verfahren gemäß einem der Ansprüche 1 bis 3 erhalten zu werden und die genannte Membran einen mittleren Porendurchmesser zwischen 2 nm und 150 nm besitzt.

8. Membran nach einem der Ansprüche 4 bis 7, dadurch gekennzeichnet, daß der mittlere Porendurchmesser des porösen Trägers A, der mit der trennenden Schicht B in Kontakt steht, zwischen 0,005 µm und 5 µm, vorzugsweise zwischen 0,01 µm und 0,1 µm liegt.

9. Membran nach einem der Ansprüche 4 bis 8, dadurch gekennzeichnet, daß die Keramik unter den Carbiden, Carbonitriden, Boriden und Nitriden ausgewählt wird.

10. Membran nach einem der Ansprüche 4 bis 9, dadurch gekennzeichnet, daß die Keramik unter SiC, SiCN, BN, TiB₂, TiN, WC, AlN, P₃N₅, ZrN und ZrC ausgewählt wird.

11. Membran nach Anspruch 7, dadurch gekennzeichnet, daß die Keramik aus Si₃N₄ besteht.

12. Membran nach Anspruch 10, dadurch gekennzeichnet, daß die aus SiC bestehende Keramik ausgehend von den Vorläuferverbindungen CH₄ und SiH₄ hergestellt wird.

13. Membran nach irgendeinem der vorstehenden Ansprüche, dadurch gekennzeichnet, daß der Träger A unter den Metalloxiden, Kohlenstoff und den Metallen ausgewählt wird.

14. Membran nach Anspruch 12, dadurch gekennzeichnet, daß das Metalloxid unter den Oxiden von Titan, Aluminium und Zirkonium ausgewählt wird.
